(19) Europäisches Patentamt
European Patent Office
Office européen des brevets

(11) **EP 2 242 223 B1**

(12) **FASCICULE DE BREVET EUROPEEN**

(45) Date de publication et mention
de la délivrance du brevet:
**31.08.2011 Bulletin 2011/35**

(51) Int Cl.:
***H04L 25/02*** *(2006.01)* ***H04B 5/00*** *(2006.01)*

(21) Numéro de dépôt: **09305314.8**

(22) Date de dépôt: **14.04.2009**

(54) **Transmission bidirectionnelle sans fil de signaux de données série entre un dispositif électronique et un compteur d'énergie**

Bidirektionelle drahtlose Signalübertragung von Seriendaten zwischen einer elektronischen Vorrichtung und einem Stromzähler

Wireless bi-directional transmission of serial data signals between an electronic device and an energy meter

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(43) Date de publication de la demande:
**20.10.2010 Bulletin 2010/42**

(73) Titulaire: **Actaris SAS**
**92100 Boulogne-Billancourt (FR)**

(72) Inventeur: **Bulteau, Serge**
**69840, JULIENAS (FR)**

(74) Mandataire: **Hervouet, Sylvie**
**Feray Lenne Conseil**
**Le Centralis**
**63, avenue du Général Leclerc**
**92340 Bourg-la-Reine (FR)**

(56) Documents cités:
**EP-A- 0 282 102 EP-A- 0 977 406**
**US-A1- 2006 109 918 US-B1- 6 603 807**

**Description**

La présente invention est relative à la transmission bi directionnelle sans fil très courte portée de signaux de données au format série entre deux équipements électroniques voisins.

On s'intéresse plus particulièrement dans la suite à la communication de tels signaux série entre le circuit électronique d'un compteur d'énergie, tel qu'un compteur d'eau, de gaz ou d'électricité, appelé dans la suite dispositif « esclave », et un dispositif électronique « maître » externe.

Le circuit électronique d'un compteur d'énergie comporte généralement un microcontrôleur disposant d'un lien série sur deux de ses ports série, un premier port $R_X$ pour la réception de signaux série, et un port $T_X$ pour l'émission des signaux série. Grâce à ce lien série, le microcontrôleur peut échanger des données séries avec d'autres dispositifs électroniques.

Ces échanges de données série peuvent être nécessaires à différents stades de la vie d'un compteur, et en particulier :

- à différents stades de la production, avant que les différents composants électroniques, dont le contrôleur, soient enfermés dans le boîtier étanche du compteur ;
- en fin de production, alors que les différents composants électroniques, dont le microcontrôleur, ont été effectivement enfermés dans le boîtier étanche du compteur ;
- au moment de l'installation du compteur sur un site de manière à permettre son paramétrage ;
- et éventuellement à tout moment durant le fonctionnement normal du compteur une fois installé, par exemple en vue d'une transmission des données du compteur vers un dispositif de télé relève.

Tant que le boîtier du compteur n'a pas été refermé sur les composants électroniques, il est aisé de procéder aux échanges de signaux série en reliant électriquement les bancs de tests en différents points du circuit électronique du compteur. Il n'est alors pas nécessaire de prévoir de connecteur particulier.

En revanche, une fois que le boîtier étanche est refermé sur les composants électroniques, il est impossible d'ouvrir à nouveau ce boîtier sans risquer de détériorer le compteur, d'autant que, sur certains modèles de compteurs, le boîtier est entièrement rempli d'une résine destinée à protéger l'électronique par rapport à des conditions environnementales sévères, telles que l'immersion du compteur. Il n'y a donc plus, dans ce cas, de contact électrique possible entre l'extérieur du compteur et le lien série du microcontrôleur.

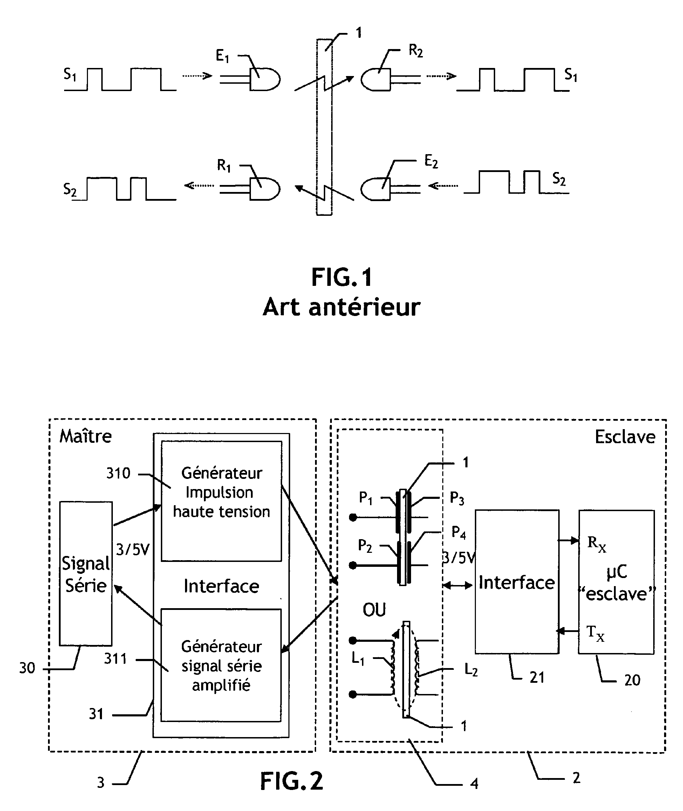

Pour permettre néanmoins à un dispositif externe « maître » de pouvoir communiquer avec le lien série du microcontrôleur (dispositif « esclave ») sans avoir recours à une connectique, il est connu d'utiliser une transmission bidirectionnelle de données série par une liaison optique. Le principe d'une telle communication est schématisé sur la figure 1 annexée: Chacun des dispositifs « maître » et « esclave » comporte une paire de composants optiques comprenant un émetteur optique ($E_1$ pour le dispositif « maître », $E_2$ pour le dispositif « esclave »), typiquement une diode électroluminescente, et un récepteur optique ($R_1$ pour le dispositif « maître », $R_2$ pour le dispositif « esclave »), typiquement une photodiode ou un phototransistor. Le dispositif externe « maitre » transmet un premier signal série $S_1$ à deux niveaux représentatif d'une succession de bits à « 0 » ou à « 1 », par l'intermédiaire de l'émetteur optique $E_1$, ce signal étant reçu par le récepteur $R_2$ relié au port série du microcontrôleur (non représenté). De même, le dispositif « esclave » répond au dispositif « maître » par transmission, sur son port d'émission série $T_X$, d'un deuxième signal série $S_2$ à deux niveaux, également représentatif d'une succession de bits à « 0 » ou à « 1 », par l'intermédiaire de son émetteur $E_2$, ce signal étant reçu par le récepteur $R_1$ du dispositif « maître ».

L'avantage d'un tel échange optique est que les signaux de données série $S_1$ et $S_2$ sont transmis tel quel, et ne nécessitent pas de transformation à la réception. Lorsque le port série $R_X$ du microcontrôleur du dispositif « esclave » reçoit un signal de données série $S_1$, le microcontrôleur est programmé pour que la réception du premier front du bit de départ (« start bit » dans la terminologie anglo-saxonne) génère une interruption, ce qui permet au microcontrôleur de se synchroniser puis de lancer une routine permettant de lire, à la vitesse connue du train de bits reçu, l'état au milieu de chaque bit suivant le bit de départ et de récupérer ainsi les données qui lui ont été transmises. L'inconvénient majeur réside néanmoins dans le fait qu'il est nécessaire de prévoir une paroi 1 sur le boîtier du compteur qui soit au moins transparente à la longueur d'onde optique utilisée. Comme le boîtier d'un compteur ne peut être totalement transparent, cela impose de prévoir localement une paroi transparente, qui risque de nuire à l'étanchéité du boîtier. En outre, le compteur doit comporter un émetteur et un récepteur optiques, ce qui vient grever le coût de production du produit. Ce surcoût est d'autant plus indésirable lorsque la communication de tels signaux série n'est utilisée que dans les phases de production et d'installation du compteur.

On connaît par ailleurs du document DE 10 2005 051 117 A1 une interface de communication entre un compteur et un module d'évaluation dans laquelle l'échange des signaux s'effectue par couplage capacitif entre des électrodes capacitives situées sur une paroi respectivement du compteur et du module. L'avantage certain d'une telle interface est que la transmission de signaux peut être effectuée au travers du boîtier en matière plastique et de la résine. En revanche, le couplage capacitif ne permet de transmettre que des variations de signaux et non des niveaux constants. Cela n'est pas gênant dans le contexte du document DE 10 2005 051 117 A1 qui prévoit de transmettre des signaux générés selon le protocole IrDA, qui se présentent donc sous la forme d'une succession d'impulsions de très courtes durées.

Une telle interface n'est cependant pas adaptée pour la communication de signaux série puisqu'il est nécessaire de reconstruire, à la réception, le signal série à partir des variations de signal reçus par couplage capacitif.

On connaît enfin des solutions d'échanges de données sans fil entre un compteur et un appareil de mesure en utilisant un couplage inductif. Tout comme dans le couplage capacitif décrit précédemment, l'échange de données par couplage inductif ne permet de transmettre que des variations de signal. Si les signaux que l'on souhaite échanger sont dans le format série, par exemple selon le format standard RS232, il est nécessaire de prévoir des moyens à la réception pour reconstruire les niveaux constants des signaux à partir des variations de signal.

Un système de transmission bi directionnelle de signaux série selon le préambule de la revendication 1 est par exemple décrit dans le document EP 0 977 406.

La présente invention a pour but de proposer une solution d'échange de données série entre un compteur d'énergie et un dispositif électronique « maître » qui utilise un couplage électromagnétique, du type capacitif ou inductif, sans grever le coût du compteur d'énergie, c'est-à-dire sans avoir besoin de recourir à des composants additionnels coûteux pour la reconstruction des signaux série.

Ce but est atteint selon l'invention qui propose un système de transmission bi directionnelle sans fil de signaux de données au format série tel que défini dans la revendication 1.

Le dispositif électronique « maître » comporte de préférence une interface interposée entre des moyens d'émission/réception de signaux de donnée au format série et lesdits moyens de couplage électromagnétique. Pour une transmission de signaux de données depuis le dispositif «électronique « maître » vers le compteur d'énergie « esclave », ladite interface comporte un générateur d'impulsion haute tension recevant les signaux de données au format série émis par les moyens d'émission/réception, et délivrant en sortie une impulsion haute tension à chaque front montant ou descendant des signaux de données au format série reçus.

Pour une transmission de signaux de données depuis le compteur d'énergie « esclave » vers le dispositif «électronique « maître », le signal de données au format série à transmettre est délivré par le port de sortie du microcontrôleur aux moyens de couplage électromagnétique, et ladite interface comporte de préférence un générateur de signal série dont l'entrée est reliée à la sortie des moyens de couplage, et dont la sortie délivre des signaux de données au format série auxdits moyens d'émission/réception.

Les moyens de couplage électromagnétique peuvent être de type inductif. Dans ce cas, les moyens de couplage électromagnétique comportent de préférence deux bobines placées de part et d'autre d'une paroi en plastique du boîtier du compteur de manière à constituer un transformateur électrique.

En variante les moyens de couplage électromagnétique peuvent être de type capacitif. Dans ce cas, ils comportent de préférence quatre plaques conductrices placées de part et d'autre d'une paroi en plastique du boîtier du compteur de façon à former deux à deux une capacité de transmission.

La présente invention sera mieux comprise au vu de la description suivante faite en référence aux figures annexées dans lesquelles :

- la figure 1 déjà décrite illustre le principe connu de l'échange de signaux de type série par liaison optique ;
- la figure 2 illustre, sous forme de schéma bloc simplifié, le principe selon l'invention de l'échange de données série par couplage électromagnétique entre un dispositif « maître » et un compteur d'énergie « esclave » comprenant un microcontrôleur ;
- la figure 3 représente le schéma électrique équivalent d'une transmission par couplage inductif ;
- la figure 4 représente le schéma électrique équivalent d'une transmission par couplage capacitif ;
- la figure 5 illustre une mise en oeuvre préférée d'un générateur haute tension du dispositif « maître » pour une transmission par couplage inductif ;
- la figure 6 illustre une mise en oeuvre préférée d'un générateur haute tension du dispositif « maître » pour une transmission par couplage capacitif ;
- la figure 7 est un exemple de signaux émis et reçus respectivement par le dispositif « maître » et le microcontrôleur du compteur « esclave », et du traitement effectué par le microcontrôleur ;
- la figure 8 est un exemple de signaux émis et reçus respectivement le microcontrôleur du compteur « esclave » et par le dispositif « maître », et du traitement par l'interface du dispositif « maître » ;
- la figure 9 illustre une mise en oeuvre du circuit d'interface du compteur « esclave » pour une transmission par couplage inductif ;
- la figure 10 illustre une mise en oeuvre du circuit d'interface du compteur « esclave » pour une transmission par couplage capacitif.

Sur la figure 2, on a schématisé sous forme de schéma bloc simplifié, les composantes nécessaires pour la communication bidirectionnelle de données série entre un dispositif « esclave » 2 constitué par un compteur d'énergie comportant un microcontrôleur 20, et un dispositif électronique « maître » 3, tel qu'un appareil de test. On rappelle que les signaux que l'on souhaite échanger entre le dispositif « maître » 3 et le dispositif « esclave » 2 sont des signaux de type série, par exemple des signaux asynchrones au format standard RS232.

De tels signaux série sont à deux niveaux constants (typiquement 0/5 Volts ou 0/3Volts pour les dispositifs alimentés par batterie) et sont représentatifs d'une succession de bits à « 0 » ou à « 1 ».

La transmission bidirectionnelle de données est réalisée par couplage électromagnétique, de type capacitif ou inductif. Ce couplage électromagnétique est schématisé par le rectangle 4 en pointillés sur la figure 2.

Deux interfaces dont le rôle sera explicité dans la suite sont également prévues, une première interface 31 au niveau du dispositif « maître », et une deuxième interface 21 au niveau du compteur « esclave », en amont du microcontrôleur 20 dans le sens de la réception.

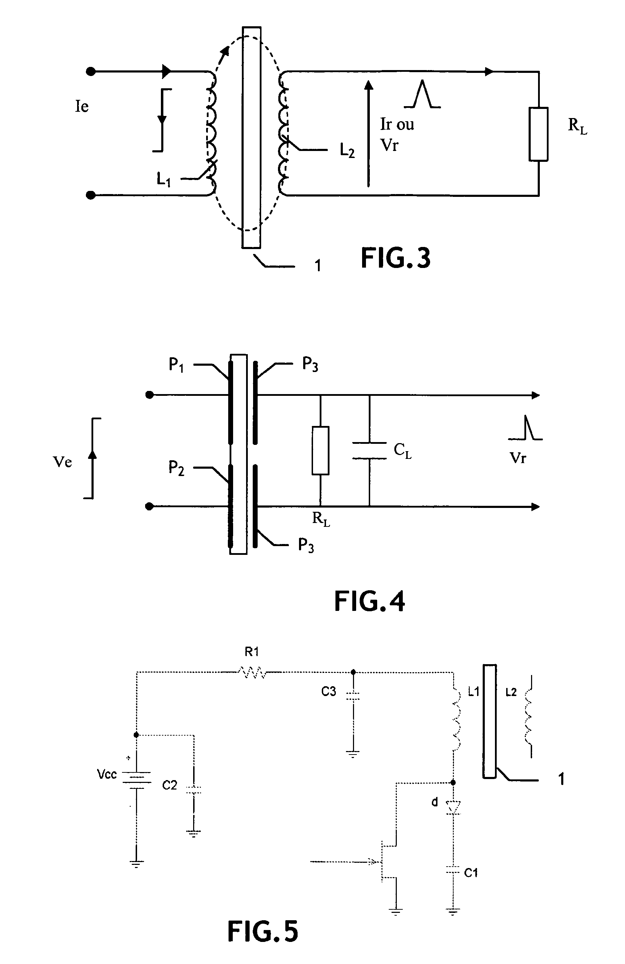

Dans le cas d'un couplage électromagnétique de type inductif, deux bobines $L_1$ et $L_2$ sont placées de part et d'autre de la paroi 1 en plastique du boîtier du compteur. Ces deux bobines constituent un transformateur électrique. Le schéma électrique équivalent est donné sur la figure 3. Si un front de courant $I_e$ est émis traversant la bobine $L_1$, une impulsion de courant $I_r$ (impédance de charge $R_L$ faible) ou de tension $V_r$ (impédance de charge $R_L$ forte) sera reçue sur la bobine $L_2$. La transmission est bidirectionnelle et les niveaux d'impulsions sont asymétriques, ce qui permet de réduire les coûts au niveau du compteur. Il convient de noter que le facteur de couplage d'une telle transmission est très faible de sorte qu'il est préférable de prévoir une fonction d'amplification des signaux qui sont transmis.

Dans le cas d'un couplage électromagnétique de type capacitif, quatre plaques conductrices $P_1$ à $P_4$ sont placées de part et d'autre de la paroi 1 en plastique du boîtier du compteur de façon à former deux à deux une capacité de transmission. Le schéma électrique équivalent est donné sur la figure 4. Si un front de tension $V_e$ est émis entre les deux plaques $P_1$ et $P_2$, une impulsion de tension $V_r$ sera reçue entre les plaques $P_3$ et $P_4$, la durée de cette impulsion dépendant de la constante de temps $R_L \times C_L$ où $R_L$ est l'impédance de charge, et $C_L$ la capacité parasite de charge. La transmission est également bidirectionnelle et les niveaux d'impulsions sont asymétriques, ce qui permet de réduire les coûts au niveau du compteur. D'après le schéma électrique de la figure 4, les plaques conductrices forment, avec la capacité parasite de charge, un diviseur de tension de sorte que l'amplitude du signal reçu est plus faible que l'amplitude du signal émis, selon le ratio

$$V_r/V_e = C_T/C_L$$

Compte tenu des ordres de grandeur des capacités (entre 0,3 et 1pF pour $C_T$ et de 10 à 20 pF pour $C_L$), l'amplitude du signal reçue peut ainsi être entre vingt et quarante fois inférieure à celle du signal émis. Une fonction d'amplification des signaux est ainsi également à prévoir.

Ainsi, quel que soit le type de transmission électromagnétique choisi, seuls les fronts montants et descendants du signal série que l'on souhaite transmettre sont effectivement transmis et reçus sous forme d'impulsions, et il est nécessaire de pouvoir reconstruire les signaux de type série à partir des impulsions reçues. En outre, dans les deux cas de transmission, il est nécessaire de prévoir des amplifications des niveaux de signaux transmis.

Pour simplifier au maximum la deuxième interface 21, l'invention prévoit que les fonctions d'amplification de signaux soient réalisées non pas au niveau de l'interface 21 du compteur, mais au niveau de l'interface 31 du dispositif « maître ».

Plus particulièrement, la première interface 31 du dispositif « maître » comprend :

- un générateur d'impulsion haute tension 310 recevant le signal de données série émis par des moyens 30 d'émission/réception du dispositif « maître » et délivrant une impulsion de niveau amplifié à chaque front du signal de données série ;
- des moyens d'amplification 311 recevant des impulsions transmises par le couplage électromagnétique 4 et résultant de l'émission d'un signal de données série par le compteur « esclave », et reconstruisant le signal de données série correspondant pour le délivrer aux moyens 30 d'émission/réception de signal au format série.

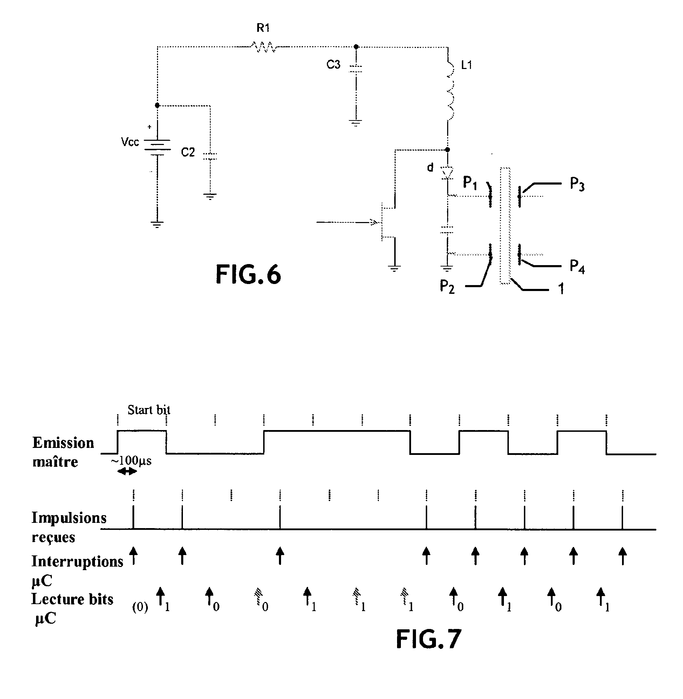

Les figures 5 et 6 illustrent une mise en oeuvre préférée du générateur d'impulsion haute tension 310 dans le cas respectivement d'une transmission par couplage inductif et d'une transmission par couplage capacitif. La génération d'impulsion s'effectue selon le principe connu de la charge d'une bobine $L_1$ jusqu'à l'obtention d'un courant déterminé suivie de la décharge de cette bobine, les cycles de charge et de décharge étant contrôlés par un transistor. A noter que, dans le cas de la transmission par couplage inductif, c'est directement la bobine $L_1$ qui est utilisée dans le générateur 310.

Les moyens 311 de l'interface peuvent être quant à eux réalisés par un montage classique à amplificateur opérationnel permettant de reconstruire un signal série à partir d'impulsions amplifiées. La logique appliquée correspond à celle d'une bascule D, pour laquelle l'état change à chaque réception d'impulsion.

Comme cela a été indiqué précédemment, la fonction de reconstruction d'un signal série depuis le dispositif « maître » vers le dispositif « esclave » ne doit pas venir grever le coût du compteur. Pour ce faire, l'invention prévoit de reconstruire ces signaux par une routine logicielle particulière du microcontrôleur 20, ce dernier recevant sur port série $R_X$ les impulsions transmises par le couplage magnétique.

La routine logicielle particulière consiste à réaliser les étapes suivantes :

- le microcontrôleur 20 génère une interruption à chaque impulsion reçue, correspondant à chaque front montant ou descendant du signal de données série émis ;
- le microcontrôleur 20 se synchronise sur la première impulsion reçue correspondant au front montant du bit de départ du signal de données série émis, et génère, à la vitesse de transmission des données série, une succession de bits, chaque bit généré étant:

   o d'une valeur égale à celle du bit précédent si aucune interruption n'a été reçue entre temps ;
   o d'une valeur égale à l'inverse de celle du bit précédent si une interruption a été reçue entre temps.

Un exemple de génération de la succession de bits par le microcontrôleur est illustré sur la figure 7. Sur cette figure, le premier chronogramme illustre l'allure d'un signal de données série émis par le dispositif « maître » en amont de l'interface 31. Ce signal de données série est formé par une succession de bits, le début du signal étant repéré par un bit de départ de valeur 1. Dans l'exemple, le signal est de la forme « 10011101010 ».

Le deuxième chronogramme illustre l'allure des impulsions haute tension générées par le générateur haute tension 310, ces impulsions correspondant à chaque front montant ou descendant du signal de données série émis par le dispositif « maître ».Compte tenu du temps de traitement nécessaire au générateur 310, ces impulsions sont légèrement décalées dans le temps (retard de l'ordre de 100 $\mu$S) par rapport aux fronts montants et descendants du signal émis. Ces impulsions sont transmises tel quel par couplage électromagnétique, capacitif ou inductif. Le troisième chronogramme illustre les interruptions générées par le microcontrôleur 20 du compteur à chaque impulsion reçue en entrée du port série $R_X$. Le dernier chronogramme montre la succession de bits générés par le microprocesseur en appliquant les règles précédemment énoncées. On retrouve bien le signal initialement émis « 1001110101 ».

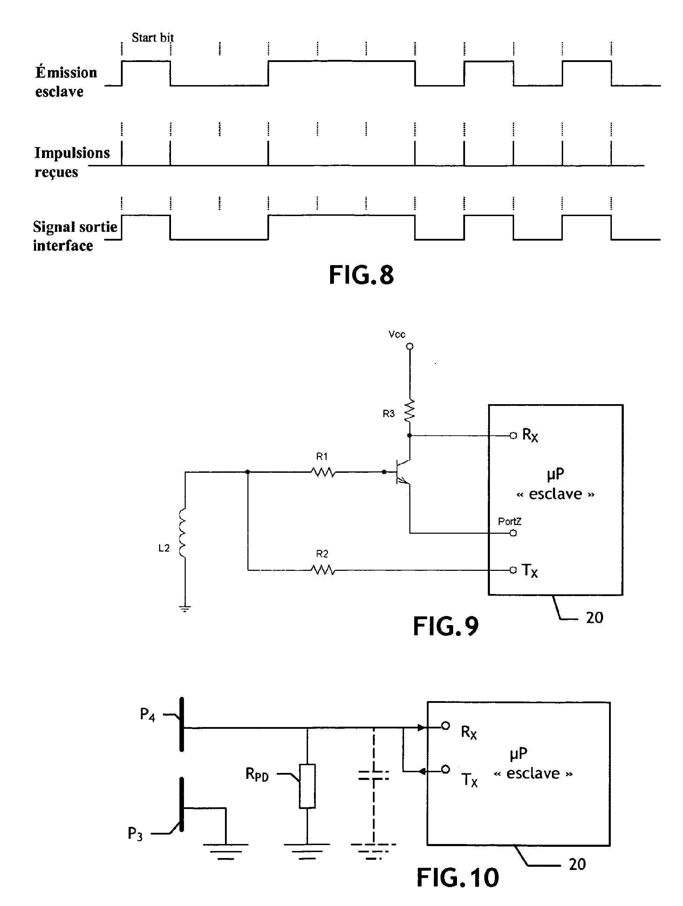

La figure 8 donne un exemple de génération d'un signal de données série lors d'une transmission d'un signal de données série depuis le microcontrôleur 20 du compteur « esclave » vers le dispositif « maître ». Sur cette figure, le premier chronogramme illustre l'allure d'un signal de données série émis directement par le port série $T_X$ du microcontrôleur. Ce signal de données série est formé par une succession de bits, le début du signal étant repéré par un bit de départ de valeur 1. Dans l'exemple, le signal est de la forme « 10011101010 ». Le deuxième chronogramme illustre le signal reçu en entrée de l'interface 31, et plus précisément en entrée du générateur de signal 311. Du fait du couplage électromagnétique, ce signal est une suite d'impulsions correspondant à chaque front montant ou descendant du signal série émis. Le troisième chronogramme illustre la sorte du générateur 311, qui correspond très exactement au signal initial émis « 10011101010 ».

Grâce au fait d'une part, que la reconstruction du signal série dans le sens dispositif « maître » vers dispositif « esclave » s'effectue de façon logicielle, et d'autre part, que les fonctions d'amplification sont réalisées au niveau du dispositif « maître », les coûts au niveau du compteur sont extrêmement réduits :

   La figure 9 illustre l'interface 21 au niveau du compteur 2 pour une transmission de type inductif. La bobine $L_2$ formant secondaire du transformateur est placée au niveau de la paroi 1 du boîtier côté interne au boîtier. L'autre bobine $L_1$ est de préférence située sur une paroi externe du dispositif électronique « maître ». Un circuit comprenant un transistor bipolaire et des résistances permet d'abaisser le niveau de tension nécessaire à l'entrée du microprocesseur pour générer les interruptions.
   La figure 10 illustre l'interface 21 au niveau du compteur 2 pour une transmission de type capacitif. Les deux plaques $P_3$ et $P_4$ peuvent être portées directement par la carte de circuit imprimé au niveau de la paroi 1 du boîtier côté interne au boîtier, la plaque $P_3$ étant reliée à la masse, et la plaque $P_4$ étant reliée aux ports d'entrée $R_X$ et de sortie $T_X$ du microcontrôleur 20. Seule une résistance de tirage vers le bas $R_{PD}$ (pull-down en terminologie anglo-saxonne) est ici nécessaire. Les deux autres plaques $P_1$ et $P_2$ peuvent également être portées par la paroi 1 du boîtier 1, côté externe au boîtier. En variante, ces plaques $P_1$ et $P_2$ sont portées sur une paroi externe du dispositif électronique « maître ».

Le système de transmission selon l'invention est compatible avec tout protocole de communication série à deux fils. En effet, l'interface 31 du dispositif « maître » n'effectue aucune conversion de protocole, mais se limite à convertir dans un sens de transmission, des fronts en impulsions, et dans l'autre sens de transmission, des impulsions en niveau. Le microcontrôleur 20 utilise quant à lui le même logiciel de communication que celui utilisé lors d'une transmission câblé, à ceci près qu'un logiciel de niveau amont est ajouté pour gérer les interruptions.

## Revendications

1. Système de transmission bi directionnelle sans fil de signaux de données au format série entre un premier dispositif électronique « maître » (3) et un deuxième dispositif électronique « esclave » (2), les signaux de données au format série étant échangés à courte distance par l'intermédiaire de moyens (4) de couplage électromagnétique bi directionnels délivrant en sortie une impulsion à chaque front montant ou descendant desdits signaux de données au format série, **caractérisé en ce que** le deuxième dispositif électronique « esclave » est un compteur d'énergie (2) comportant un microcontrôleur (20) disposant d'un port d'entrée série ($R_X$), **en ce que** pour une transmission de signaux de données depuis le dispositif électronique « maître » (3) vers le compteur d'énergie « esclave » (2), les impulsions en sortie des moyens (4) de couplage électromagnétique sont des impulsions positives délivrées sur ledit port d'entrée série ($R_X$), et **en ce que** le microcontrôleur (20) est programmé de façon à :

- générer une interruption pour que chaque impulsion reçue sur ledit port d'entrée ($R_X$),
- se synchroniser sur la première impulsion reçue et
- générer, à la vitesse de transmission des données série, une succession de bits, la valeur de chaque bit généré étant:

o égale à celle du bit précédent si aucune interruption n'a été reçue entre temps ;
o égale à l'inverse de celle du bit précédent si une interruption a été reçue entre temps.

2. Système de transmission selon la revendication 1, **caractérisé en ce que** le dispositif électronique « maître » (3) comporte une interface (31) interposée entre des moyens (30) d'émission/réception de signaux de donnée au format série et lesdits moyens (4) de couplage électromagnétique, et **en ce que**, pour une transmission de signaux de données depuis le dispositif «électronique « maître » (3) vers le compteur d'énergie « esclave » (2), ladite interface (31) comporte un générateur (310) d'impulsion haute tension recevant les signaux de données au format série émis par les moyens (30) d'émission/réception, et délivrant en sortie une impulsion haute tension à chaque front montant ou descendant des signaux de données au format série reçus.

3. Système de transmission selon la revendication 2, **caractérisé en ce que**, pour une transmission de signaux de données depuis le compteur d'énergie « esclave » (2) vers le dispositif «électronique « maître » (3), le signal de données au format série à transmettre est délivré par le port de sortie ($T_X$) du microcontrôleur (20) aux moyens (4) de couplage électromagnétique, et **en ce que** ladite interface (31) comporte un générateur (311) de signal série dont l'entrée est reliée à la sortie des moyens de couplage, et dont la sortie délivre des signaux de données au format série auxdits moyens (30) d'émission/réception.

4. Système de transmission selon l'une quelconque des revendications précédentes, **caractérisé en ce que** les moyens (4) de couplage électromagnétique sont de type inductif.

5. Système de transmission selon la revendication 4, **caractérisé en ce que** les moyens (4) de couplage électromagnétique comportent deux bobines ($L_1$, $L_2$) placées de part et d'autre d'une paroi (1) en plastique du boîtier du compteur (2) de manière à constituer un transformateur électrique.

6. Système de transmission selon l'une quelconque des revendications 1 à 3, **caractérisé en ce que** les moyens (4) de couplage électromagnétique sont de type capacitif.

7. Système de transmission selon la revendication 6, **caractérisé en ce que** les moyens (4) de couplage électromagnétique comportent quatre plaques conductrices ($P_1$ à $P_4$) placées de part et d'autre d'une paroi (1) en plastique du boîtier du compteur (2) de façon à former deux à deux une capacité de transmission.

**Claims**

1. A wireless system for bidirectional transmission of data signals in a serial format between a first « master » electronic device (3) and a second « slave » electronic device (2), the serial format data signals being exchanged over a short distance via bidirectional electromagnetic coupling means (4) delivering at the output a pulse at each rising or falling edge of said serial format data signals, **characterized in that** the second « slave » electronic device is an energy counter (2) including a microcontroller (20) having a serial input port (Rx), **in that** for a transmission of data signals from the first « master » electronic device (3) to the « slave » energy counter (2), the output pulses from the electromagnetic coupling means (4) are positive pulses delivered on said serial input port (Rx), and **in that** the microcontroller (20) is programmed so as to:

- generate an interrupt for each pulse received on said input port (Rx),
- synchronize on the first received pulse and
- generate, at the transmission rate of the serial data, a succession of bits, the value of each generated bit being:

o equal to that of the preceding bit, if no interrupt has been received in the meantime;
o equal to the inverse of that of the preceding bit if an interrupt has been received in the meantime.

**2.** The transmission system according to claim 1, **characterized in that** the « master » electronic device (3) includes an interface (31) interposed between means (30) for transceiving serial format data signals and said electromagnetic coupling means (4), and **in that** for a transmission of data signals from the first « master » electronic device (3) to the « slave » energy counter (2), said interface (31) includes a high voltage pulse generator (310) receiving serial format data signals transmitted by the transceiving means (30), and delivering at the output a high voltage pulse at each rising or falling edge of the received serial format data signals.

**3.** The transmission system according to claim 2, **characterized in that**, for a transmission of data signals from the « slave » energy counter (2) to the « master » electronic device (3), the serial format data signal to be transmitted is delivered by the output port (Tx) of the microcontroller (20) to the electromagnetic coupling means (4), and **in that** said interface (31) includes a serial signal generator (311), the input of which is connected to the output of the coupling means, and the output of which delivers serial format data signals to said transceiving means (30).

**4.** The transmission system according to any of the preceding claims, **characterized in that** the electromagnetic coupling means (4) are of the inductive type.

**5.** The transmission system according to claim 4, **characterized in that** the electromagnetic coupling means (4) include two coils ($L_1$,$L_2$) placed on either side of a plastic wall (1) of the casing of the counter (2) so as to form an electric transformer.

**6.** The transmission system according to any of claims 1 to 3, **characterized in that** the electromagnetic coupling means (4) are of the capacitive type.

**7.** The transmission system according to claim 6, **characterized in that** the electromagnetic coupling means (4) include four conducting plates ($P_1$ to $P_4$) placed on either side of a plastic wall (1) of the casing of the counter (2) so as to form a transmission capacitor two by two.

**Patentansprüche**

**1.** System für die bidirektionale drahtlose Übertragung von Datensignalen im seriellen Format zwischen einer ersten elektronischen Vorrichtung "Master" (3) und einer zweiten elektronischen Vorrichtung "Slave" (2), wobei die Datensignale im seriellen Format auf kurzer Entfernung über bidirektionale elektromagnetische Kopplungsmittel (4) ausgetauscht werden, die jeder aufsteigenden oder absteigenden Flanke der Datensignale im seriellen Format am Ausgang einen Impuls bereitstellen, **dadurch gekennzeichnet, dass** die zweite elektronische Vorrichtung "Slave" ein Energiezähler (2) ist, der einen Mikrosteuerbaustein (20) aufweist, der über einen seriellen Eingangsport ($R_X$) verfügt, dass für eine Datensignalübertragung von der elektronischen Vorrichtung "Master" (3) zum Energiezähler "Slave" (2) die Impulse am Ausgang der elektronischen Kopplungsmitteln (4) positive Impulse sind, die über den seriellen Eingangsport ($R_X$) bereitgestellt werden, und dass der Mikrosteuerbaustein (20) derart programmiert ist, um:

- für jeden am Eingangsport ($R_X$) erhaltenen Impuls eine Unterbrechung zu generieren,
- sich auf dem ersten erhaltenen Impuls zu synchronisieren,
- in Übertragungsgeschwindigkeit der seriellen Daten eine Bitfolge zu generieren, wobei der Wert jedes generierten Bits ist:

    º gleich dem Wert des vorangehenden Bits, wenn zwischenzeitlich keine Unterbrechung empfangen wurde,
    º gleich dem Kehrwert des vorangehenden Bits, wenn zwischenzeitlich eine Unterbrechung empfangen wurde.

**2.** Übertragungssystem nach Anspruch 1, **dadurch gekennzeichnet, dass** die elektronische Vorrichtung "Master" (3) eine Schnittstelle (31) zwischen den Sende-/Empfangsmitteln (30) von Datensignalen im seriellen Format und den elektromagnetischen Kopplungsmitteln (4) aufweist, und dass die Schnittstelle (31) für eine Datensignalübertragung von der elektronischen Vorrichtung "Master" (3) an den Energiezähler "Slave" (2) einen Hochspannungs-Impulsgeber (310) aufweist, der die Datensignale im seriellen Format, die von den Sende-/Empfangsmitteln (30) gesendet werden, empfängt und am Ausgang jeder aufsteigenden oder absteigenden Flanke der empfangenen Datensignale im seriellen Format einen Hochspannungsimpuls bereitstellt.

**3.** Übertragungssystem nach Anspruch 2, **dadurch gekennzeichnet, dass** das zu übertragende Datensignal im seriellen Format für eine Übertragung von Datensignalen vom Energiezähler "Slave" (2) an die elektronische Vorrichtung "Master" (3) den elektromagnetischen Kopplungsmittel (4) vom Ausgangsport ($T_x$) des Mikrosteuerbausteins (20) bereitgestellt wird, und dass die Schnittstelle (31) einen Seriensignalgeber (311) aufweist, dessen Eingang mit dem Ausgang der Kopplungsmittel verbunden ist und dessen Ausgang den Sende-/Empfangsmitteln (30) Datensignale im seriellen Format bereitstellt.

4. Übertragungssystem nach einem der vorangehenden Ansprüche, **dadurch gekennzeichnet, dass** die elektromagnetischen Kopplungsmittel (4) induktiven Typs sind.

5. Übertragungssystem nach Anspruch 4, **dadurch gekennzeichnet, dass** die elektromagnetischen Kopplungsmittel (4) zwei Spulen ($L_1$, $L_2$) aufweist, die auf der einen und der anderen Seite einer Wand (1) aus Kunststoff des Gehäuses des Zählers (2) derart platziert sind, dass sie einen elektrischen Transformator bilden.

6. Übertragungssystem nach einem der Ansprüche 1 bis 3, **dadurch gekennzeichnet, dass** die elektromagnetischen Kopplungsmittel (4) kapazitiven Typs sind.

7. Übertragungsmittel nach Anspruch 6, **dadurch gekennzeichnet, dass** die elektromagnetischen Kopplungsmittel (4) vier Leiterplatten ($P_1$ bis $P_4$) aufweisen, die auf der einen und der anderen Seite einer Wand (1) aus Kunststoff des Gehäuses des Zählers (2) derart platziert sind, dass sie paarweise eine Übertragungskapazität bilden.

**FIG.1**
**Art antérieur**

**FIG.2**

**FIG.3**

**FIG.4**

**FIG.5**

**FIG.6**

**FIG.7**

Start bit

Émission
esclave

Impulsions
reçues

Signal sortie
interface

## FIG.8

Vcc

R3

Rx

μP
« esclave »

R1

L2

PortZ

R2

Tx

## FIG.9

20

P₄

Rx

μP
« esclave »

R_PD

Tx

P₃

## FIG.10

20

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102005051117 A1
- EP 0977406 A